# FASCICULE DE BREVET EUROPEEN

(11) **EP 0 515 284 B1**
(45) Date de publication et mention de la délivrance du brevet: **08.11.1995**
(21) Numéro de dépôt: 92401407.9
(22) Date de dépôt: 22.05.1992
(51) Int. Cl.: C09D 11/00, C04B 41/00, B44D 5/00

(54) **Encres et procédé pour le marquage ou la décoration d'objets, notamment d'objets en céramique**
Tinte und Verfahren für die Markierung oder für Dekorationswerke, insbesondere keramische Formkörper
Inks and method for the marking or the decoration of objects, especially ceramic objects

(30) Priorité: 24.05.1991 FR 9106284
(43) Date de publication de la demande: 25.11.1992
(73) Titulaire: IMAJE S.A., 26500 Bourg les Valence (FR)
(72) Inventeur: de Saint, Romain Pierre, F-75116 Paris (FR)
(74) Mandataire: Dubois-Chabert, Guy

(56) Documents cités:
- EP-A- 0 379 674
- WORLD PATENTS INDEX LATEST Derwent Publications Ltd., London, GB; AN 87-345630
- WORLD PATENTS INDEX LATEST Derwent Publications Ltd., London, GB; AN 91011472

## Description

L'invention concerne des encres qui peuvent être utilisées pour le marquage et la décoration d'objets qui doivent être portés à de hautes températures, notamment d'objets en matériau de type céramique. Les encres selon l'invention sont particulièrement aptes à permettre le marquage ou la décoration desdits objets par jet d'encre.

L'impression par jet d'encre est une technique bien connue qui permet le marquage et la décoration à grande vitesse de toutes sortes d'objets, sans contact du dispositif d'impression avec ces derniers. Les dispositifs d'impression peuvent être du type "goutte à la demande" ou du type "jet continu".

Les ingrédients qui composent les encres actuelles sont des produits organiques, colorants, pigments ou résines, qui sont dispersés dans des solvants plus ou moins volatils ou dans l'eau. Dans tous les cas, à l'exception de l'oxyde de titane utilisé dans les encres blanches, ces ingrédients ne résistent pas plus que quelques minutes à des températures supérieures à 300°C.

Or, dans l'industrie de fabrication de la céramique, on utilise des techniques de frittage ou de fusion de poudres dans lesquelles les objets sont portés à des températures d'au moins 500°C et pouvant aller jusqu'à 1300°C et au-delà, ce qui ne permet pas d'utiliser des encres comportant des produits organiques.

Avant ce chauffage, les objets sont en général pulvérulents et ne peuvent être manipulés sans risque de les endommager en surface. Aussi, lorsque ces objets doivent être repérés, marqués ou décorés de façon indélébile, les fabricants ont recours soit à des modifications du relief des objets avant cuisson, soit à une première cuisson à température peu élevée pour les rendre manipulables et non pulvérulents en surface.

Ensuite, sur ces objets partiellement cuits, on applique des marquages ou des décorations par décalcomanie notamment. Les couleurs de ces décalcomanies sont données par des pigments exclusivement minéraux qui sont résistants aux températures de cuisson de ces objets. De tels pigments minéraux sont des combinaisons d'oxydes métalliques qui, par leur structure cristalline particulière, comme celle des spinelles, ont des couleurs différentes et variées.

Parmi les métaux les plus couramment employés et dont les oxydes sont colorés ou opaques, on peut citer sans être exhaustif le fer, le chrome, le cuivre, le cobalt, le manganèse, l'antimoine, le titane le zirconium, l'étain, le vanadium seul ou combinés entre eux ou encore en combinaison avec des métaux comme le silicium, le magnésium dont les oxydes ne sont pas colorés.

Pour la décoration des céramiques, il a été proposé d'utiliser le procédé d'impression par jet d'encre (article de W. ROBERTS dans la revue "L'INDUSTRIE CERAMIQUE n° 827.5/88) en utilisant les mêmes pigments que ceux qui sont utilisés dans l'impression classique des céramiques telle qu'indiquée ci-dessus. Dans un tel procédé le principal problème à résoudre est celui lié à la grande différence de densité entre le pigment et le liquide dans lequel il est dispersé.

Le but de la présente invention est alors d'obtenir des encres projetables par jet qui peuvent être utilisées pour le marquage ou la décoration à des températures supérieures à 300°C grâce à des sels métalliques dont la couleur n'apparaît qu'après cuisson, ces encres contenant également des colorants organiques de manière à faire apparaître le marquage ou la décoration avant cuisson.

L'invention concerne donc une encre projetable par jet, pour le marquage ou la décoration d'un objet, consistant en une solution d'au moins un sel métallique soluble dans au moins un solvant, ledit sel métallique formant après décomposition à température élevée un oxyde coloré ou une combinaison colorée avec le matériau dont est constitué l'objet, caractérisé en ce que ladite solution comprend en outre au moins un colorant organique visible avant tout changement d'état du sel métallique dû à une élévation de température, ledit colorant organique étant détruit lors de ladite élévation de température.

La proportion de sel métallique soluble est de préférence au plus égale à quarante pour-cent de la masse totale de l'encre.

Dans le cas de l'utilisation de plusieurs solvants, au moins l'un d'entre eux peut être peu volatil dans une proportion d'au plus quarante pour-cent, les autres étant plus volatils que le premier.

Pour éviter la diffusion de l'encre projetée dans et/ou sur la surface de l'objet, l'invention propose d'ajouter un polymère dans une proportion d'au plus dix pour-cent de la masse totale de l'encre.

Les sels métalliques utilisables sont ceux des métaux formant après décomposition à température élevée des oxydes colorés ou des combinaisons colorées avec le matériau dont est constitué l'objet. Parmi ces métaux, on citera, sans être exhaustif : le chrome, le manganèse, le fer, le cobalt, le cuivre, le zinc, le molybdène, l'étain, l'antimoine, le bore, le plomb, le zirconium, le titane, le vanadium.

Les solvants utilisables sont de préférence l'éthanol, le méthanol ou l'eau, auquel on peut ajouter un solvant moins volatil tel que le glycérol ou le diméthylformamide.

Avec de telles compositions, on peut obtenir des encres ayant des viscosités comprises entre 1 et 10 centipoises (millipascal-sec) qui sont aptes à être utilisées dans des dispositifs d'impression par jet d'encre.

Les encres selon l'invention peuvent être définies de manière générale par les proportions suivantes des ingrédients par rapport à la masse totale de chaque encre :
(a) jusqu'à quarante pour-cent d'un ou plusieurs sels métalliques solubles,
(b) zéro à quarante pour-cent d'un ou plusieurs solvants,
(c)jusqu' à cinq pour-cent d'un ou plusieurs colorants organiques,
(d) zéro à dix pour-cent d'un ou plusieurs polymères,
(e) le reste étant constitué d'un ou plusieurs solvants qui sont plus volatils que le/ou les solvants de(b).

On remarquera que les ingrédients ou produits (b) et (d) ne sont pas nécessaires pour certaines encres et ne sont donc utilisés que pour des applications particulières comme cela apparaîtra dans la suite de la description, notamment dans celle des différents exemples.

Les sels métalliques utilisables sont ceux obtenus à partir de métaux formant après décomposition par la chaleur des oxydes colorés ou des combinaisons colorées avec le matériau de l'objet sur lequel ils sont déposés.

Les métaux qui donnent des oxydes métalliques colorés sont très nombreux tels que, par exemple à titre non limitatif, le chrome, le manganèse, le fer, le cobalt, le cuivre, le zinc, le molybdène, l'étain, l'antimoine, le bore, le plomb, le zirconium, le titane, le vanadium.

Le choix du ou des sels métalliques sera guidé par les considérations suivantes :
- La solubilité dans le ou les solvants utilisés :
   Le sel métallique doit être soluble dans le ou les solvants utilisés et ne doit donc pas être en dispersion comme le serait un pigment classique.
- Volatilité :
   Le sel métallique ne doit pas se volatiliser avant ou en même temps qu'il se décompose et se transforme en oxyde avec ou sans combinaison avec le matériau de l'objet à marquer ou à colorer.
   Parmi les sels métalliques, on peut citer à titre non limitatif des produits dits minéraux tels que les chlorures, les sulfates, les nitrates, les acétates, les carbonates, et des produits dits organométalliques tels que les naphténates, les octoates, les néodécanoates, les résinates et leurs dérivés.
- Dissociation ionique dans le solvant :
   Dans le cas où le dispositif d'impression met en oeuvre un jet continu dévié électrostatiquement, qu'il soit binaire ou tramé, l'encre doit être conductrice.
- Propriétés d'oxydation et de corrosion du dispositif d'impression.
   Le sel métallique ne doit pas oxyder ou corroder les matériaux utilisés pour fabriquer les dispositifs d'impression. Ainsi, les chlorures sont connus pour catalyser des réactions d'oxydation des aciers et sont donc à éviter dans ce cas. De même, l'électropositivité de certains métaux comme l'aluminium peut conduire, en présence de certains sels métalliques d'électro- positivité plus faible que celle du métal de fabrication du dispositif d'impression, à des corrosions importantes.
- Toxicité :
   Les sels métalliques toxiques doivent être évités dans certaines applications en raison de leur toxicité vis-à-vis de l'environnement. C'est ainsi qu'il est connu que les sels du chrome VI sont beaucoup plus toxiques que ceux du chrome III.
- Couleur à obtenir :
   La couleur à obtenir sur l'objet dépend non seulement de celle provenant du sel métallique utilisé mais aussi du matériau de l'objet avec lequel le sel métallique va réagir. Ainsi, certains sels de cobalt peuvent donner des couleurs bleues ou noires selon le matériau de l'objet et la température de cuisson.
- Température maximale de cuisson de l'objet :
   C'est ainsi que les oxydes de cuivre obtenus après cuisson de l'objet se volatilisent lorsque la température de cuisson dépasse 500°C.

Le ou les colorants organiques sont nécessaires car les sels métalliques en solution n'ont qu'une très faible intensité colorante et, en outre, cette intensité peut varier avec l'humidité. L'usage d'un tel colorant organique permet de rendre visible sur l'objet le marquage ou la coloration avant le chauffage de ce dernier à haute température.

Par sa nature essentiellement organique, le colorant sera détruit par la chaleur et n'interférera pas avec le composé métallique. Le choix de ce colorant sera guidé essentiellement par sa solubilité dans la solution de sel(s) métallique(s).

De plus, il ne devra pas destabiliser la solution, ni provoquer de précipité.

Parmi la grande variété de colorants organiques, la préférence sera donnée à ceux ayant un fort pouvoir colorant et étant compatibles avec les sels métalliques utilisés avant et pendant la cuisson. Il en est ainsi des colorants acides et des colorants alimentaires.

Le polymère qui peut être utilisé a pour fonction de réguler la diffusion dans le matériau de l'objet des ingrédients apportant la coloration. On choisira de préférence un ou des polymères solubles dans les solvants utilisés. De préférence, on utilisera un dérivé de la cellulose ou une résine phénolique.

Le choix des solvants est guidé par les critères suivants :
- Solubilité :
   Le solvant doit dissoudre le ou les sels métalliques.
- Polarité :
   Lorsque l'encre doit présenter une conductivité électrique, la polarité du solvant doit permettre la dissociation ionique de la solution. Dans ce cas, l'eau et les alcools sont des solvants préférés.
- Volatilité :
   La volatilité permet de contrôler la pénétration de l'encre sur les objets poreux. En outre, certains sels métalliques ou organométalliques ont tendance à se cristalliser lors de l'évaporation du solvant dans lequel ils sont dissous; dans ce cas, il est important d'utiliser un solvant peu volatil afin d'éviter la cristallisation dans les circuits de fluides des dispositifs d'impression.
- Toxicité :
   Le solvant ne doit pas être toxique vis-à-vis de l'environnement et de l'utilisateur. Pour cette raison, il est préférable d'utiliser de l'éthanol au lieu du méthanol.

A titre d'illustration de l'invention, le tableau ci-après donne deux exemples de compositions d'encres ainsi que leur viscosité et leur conductivité correspondantes.

Les encres préparées selon le tableau ont été testées sur des dispositifs d'impression à jet d'encre pour réaliser des marquages sur des plaques de céramique (porcelaine) non cuites. Ensuite, ces plaques marquées

| | e6 | e7 |
|---|---|---|
| chlorure de manganèse II à 4 molécules d'eau | 25 | - |
| chlorure de cobalt II à 6 molécules d'eau | - | 20 |
| diméthylformamide | - | 1 |
| brillant bleu FCF (FD&C blue #1) | 1 | 0,5 |
| hydroxypropylcellulose | - | 0,5 |
| éthanol dénaturé | 74 | 79 |
| viscosité (mPa.s) | 6,0 | 6,8 |
| conductivité (mS/cm) | 3,67 | >3 |

ont été chauffées à des températures variant de 500°C à 1250°C de manière à transformer les sels métalliques en oxydes métalliques donnant les colorations souhaitées.

### Exemple 6 - e6

Avec cette encre à base de chlorure de manganèse II, de brillant bleu FCF (FD&C blue #1) et d'éthanol dénaturé, des marquages de couleur bleue avant cuisson grâce au composant organique et brune après cuisson à 1000°C ont été obtenus.

### Exemple 7 - e7

Cette encre à base de chlorure de cobalt II, de diméthylformamide, de brillant FCF (FD&C blue #1), et d'hydroxypropylcellulose et d'éthanol dénaturé combine l'ensemble des avantages apportés par un solvant peu volatil (diméthylformamide) pour un excellent comportement en imprimante (pas de cristallisation), un composant organique (brillant bleu FCF) pour la lisibilité du marquage avant cuisson et un polymère (hydroxypropylcellulose) pour diminuer la diffusion des colorants dans le matériau poreux de l'objet et ainsi augmenter le contraste.

Dans le cas où le solvant est de l'eau, il est nécessaire qu'elle soit déminéralisée pour éviter l'influence que pourrait avoir les minéraux sur les différents composants de l'encre avant et après cuisson.

En outre, il est recommandé d'ajouter à l'eau un agent anti-moussant tel que celui vendu sous l'appellation SURFYNOL 440 par la société AIR PRODUCTS.

De manière générale, le solvant volatil sera un alcool de faible masse moléculaire tel qu'un éthanol ou un méthanol tandis que le solvant moins volatil sera un alcool de masse moléculaire élevée tel qu'un glycol, un éther de glycol, le glycérol ou le diméthylformamide, ainsi que leurs dérivés.

L'invention concerne également un procédé de marquage et de décoration d'un objet qui doit être chauffé à des températures supérieures à 300°C qui consiste à :
- projeter un jet d'une encre comportant au moins un sel métallique soluble dans un solvant telle que définie ci-dessus de manière à obtenir une impression de la surface dudit objet suivant un motif déterminé, et
- à chauffer l'objet imprimé par ladite encre à une température suffisante et déterminée pour transformer le ou lesdits sels métalliques en un ou des oxydes métalliques dont la couleur correspond à celle recherchée.

## Revendications

1. Encre projetable par jet, pour le marquage ou la décoration d'un objet, consistant en une solution d'au moins un sel métallique soluble dans au moins un solvant, ledit sel métallique formant après décomposition à température élevée un oxyde coloré ou une combinaison colorée avec le matériau dont est constitué l'objet, caractérisée en ce que ladite solution comprend en outre au moins un colorant organique visible avant tout changement d'état du sel métallique dû à une élévation de température, ledit colorant organique étant détruit lors de ladite élevation de température.

2. Encre selon la revendication 1, caractérisée en ce que le sel métallique soluble est un sel minéral ou organométallique de zirconium, de chrome.

3. Encre selon la revendication 1, caractérisée en ce que le sel métallique soluble est un sel minéral ou organométallique de manganèse, de cobalt ou de fer.

4. Encre selon l'une des revendications 1 à 4, caractérisée en ce que, dans le cas de l'utilisation de plusieurs solvants, l'un d'entre eux peut être moins volatile que les autres.

5. Encre selon la revendication 4, caractérisée en ce que le solvant de moins grande volatilité est dans une proportion d'au plus quarante pour cent de la masse totale d'encre.

6. Encre selon l'une quelconque des revendications 1 à 5, caractérisée en ce que le colorant organique est dans une proportion d'au plus cinq pour cent de la masse totale d'encre.

7. Encre selon l'une des revendications 1 à 6, caractérisée en ce que la solution comprend en outre, au moins un polymère, dans une proportion d'au plus dix pour cent de la masse totale d'encre.

8. Encre selon l'une des revendications 1 à 7, caractérisée en ce que le sel métallique soluble est de préférence un acétate ou un propionate du métal considéré.

9. Encre selon l'une des revendications 1 à 7, caractérisée en ce que l'un des solvants est un alcool de faible masse moléculaire.

10. Encre selon la revendication 9, caractérisée en ce que l'alcool est choisi dans le groupe comprenant l'éthanol, le méthanol.

11. Encre selon l'une des revendications 1 à 10, caractérisée en ce que l'un des solvants est de l'eau déminéralisée à laquelle est ajouté un agent antimoussant.

12. Encre selon l'une des revendications 1 à 11, caractérisée en ce que le solvant moins volatile que les autres est un alcool de masse moléculaire élevée.

13. Encre selon la revendications 12, caractérisée en ce que l'alcool est choisi dans le groupe comprenant le glycol, un éther de glycol, le glycérol ou un de leurs dérivés.

14. Encre selon l'une des revendications 1 à 13, caractérisée en ce que le colorant organique est un colorant acide ou un colorant alimentaire.

15. Procédé de marquage et de décoration d'un objet, notamment d'un objet en céramique, qui doit être chauffé à des températures supérieures à 300°C, consistant à:
- projeter un jet d'une encre selon l'une quelconque des revendications 1 à 14, destiné à obtenir une impression de la surface dudit objet selon un motif déterminé, et
- à chauffer ledit objet imprimé par ladite encre à une température déterminée pour transformer le ou lesdits sels métalliques en un ou plusieurs oxydes métalliques dont la couleur correspond à celle recherchée.

## Claims

1. Jet-sprayable ink for marking or decorating an object, consisting of a solution of at least one metallic salt soluble in at least one solvent, said metallic salt forming, after decomposition at elevated temperature, a coloured oxide or a coloured combination with the material from which the object is made, characterized in that said solution also incorporates at least one organic dye visible prior to any state change of the metallic salt due to a temperature rise, said organic dye being destroyed during said temperature rise.

2. Ink according to claim 1, characterized in that the soluble metallic salt is a mineral or organometallic salt of zirconium or chromium.

3. Ink according to claim 1, characterized in that the soluble metallic salt is a mineral or organometallic salt of manganese, cobalt or iron.

4. Ink according to any one of the claims 1 to 3, characterized in that in the case of using several solvents one of them can be less volatile than the others.

5. Ink according to claim 4, characterized in that the lower volatility solvent is in a proportion of at the most 40% of the total mass of ink.

6. Ink according to any one of the claims 1 to 5, characterized in that the organic dye is in a proportion of at the most 5% of the total mass of ink.

7. Ink according to any one of the claims 1 to 6, characterized in that the solution also incorporates at least one polymer, in a proportion of at the most 10% of the total mass of ink.

8. Ink according to any one of the claims 1 to 7, characterized in that the soluble metallic salt is preferably an acetate or a propionate of the considered metal.

9. Ink according to any one of the claims 1 to 7, characterized in that one of the solvents is a low molecular weight alcohol.

10. Ink according to claim 9, characterized in that the alcohol is chosen from within the group comprising ethanol and methanol.

11. Ink according to any one of the claims 1 to 10, characterized in that one of the solvents is demineralized water to which is added an anti-foaming agent.

12. Ink according to one of the claims 1 to 11, characterized in that the solvent which is less volatile than the others is a high molecular weight alcohol.

13. Ink according to claim 12, characterized in that the alcohol is chosen from within the group including glycol, a glycol ether, glycerol or one of their derivatives.

14. Ink according to one of the claims 1 to 13, characterized in that the organic dye is an acid dye or a food dye.

15. Process for marking and decorating an object, particularly a ceramic object, which has to be heated to temperatures above 300°C consisting of:
- spraying a jet of an ink according to any one of the claims 1 to 14 for obtaining the printing of the surface of said object in accordance with a given pattern and
- heating said object printed by said ink at a predetermined temperature in order to transform the metallic salt or salts into one or more metallic oxides, whose colour corresponds to the sought colour.

## Patentansprüche

1. Strahlspritztinte zur Markierung oder zur Dekoration eines Objektes, die aus einer Lösung besteht, welche mindestens ein metallisches Salz enthält, das in mindestens einem Lösungsmittel löslich ist, wobei das genannte metallische Salz nach der Zersetzung bei hoher Temperatur mit dem Material, aus dem das Objekt besteht, ein farbiges Oxid oder eine farbige Verbindung bildet, dadurch gekennzeichnet, daß die genannte Lösung unter anderem mindestens einen organischen Farbstoff enthält, der vor jeglicher Zustandsänderung des metallischen Salzes infolge einer Temperaturerhöhung sichtbar ist, während der genannte organische Farbstoff während der genannten Temperaturerhöhung zerstört wird.

2. Tinte nach Anspruch 1, dadurch gekennzeichnet, daß das lösliche Metallsalz ein mineralisches oder organometallisches Zirkon-Chrom-Salz ist.

3. Tinte nach Anspruch 1, dadurch gekennzeichnet, daß das lösliche Metallsalz ein mineralisches oder organometallisches Mangan-, Kobalt- oder Eisensalz ist.

4. Tinte nach einem der Ansprüche 1 bis 4, dadurch gekennzeichnet, daß bei Verwendung mehrerer Lösungsmittel eines davon weniger flüchtig sein kann als die anderen.

5. Tinte nach Anspruch 4, dadurch gekennzeichnet, daß das Lösungsmittel mit dem geringeren Verflüchtigungsgrad einen Anteil von höchstens 40% an der Gesamtmasse der Tinte hat.

6. Tinte nach einem der Ansprüche 1 bis 5, dadurch gekennzeichnet, daß der organische Farbstoff einen Anteil von höchstens 5% an der Gesamtmasse der Tinte hat.

7. Tinte nach einem der Ansprüche 1 bis 6, dadurch gekennzeichnet, daß die Lösung unter anderen mindestens 1 Polymer enthält, das einen Anteil von höchstens 10% an der Gesamtmasse der Tinte hat.

8. Tinte nach einem der Ansprüche 1 bis 7, dadurch gekennzeichnet, daß das lösliche Metallsalz ein Azetat oder Propionat des betreffenden Metalls ist.

9. Tinte nach einem der Ansprüche 1 bis 7, dadurch gekennzeichnet, daß eines der Lösungsmittel ein Alkohol mit einer geringen Molekularmasse ist.

10. Tinte nach Anspruch 9, dadurch gekennzeichnet, daß der Alkohol aus der Äthanol und Methanol umfassenden Gruppe ausgewählt wird.

11. Tinte nach einem der Ansprüche 1 bis 10, dadurch gekennzeichnet, daß eines der Lösungsmittel entsalztes Wasser ist, dem ein Antischaummittel beigemengt ist.

12. Tinte nach einem der Ansprüche 1 bis 11, dadurch gekennzeichnet, daß das Lösungsmittel, das weniger flüchtig ist als die anderen, ein Alkohol mit hoher Molekularmasse ist.

13. Tinte nach Anspruch 12, dadurch gekennzeichnet, daß der Alkohol aus der Gruppe ausgewählt wird, die die Stoffe Glykol, Glykoläther, Glycerol oder eines ihrer Derivate enthält.

14. Tinte nach einem der Ansprüche 1 bis 13, dadurch gekennzeichnet, daß der organische Farbstoff ein saurer Farbstoff oder ein Lebensmittelfarbstoff ist.

15. Verfahren zur Markierung und Dekoration eines Objektes, insbesondere von keramischen Formkörpern, die auf eine Temperatur von über 300 erhitzt werden müssen, welches darin besteht, daß:
- ein Tintenstrahl mit einer Tinte nach einem der Ansprüche 1 bis 14 appliziert wird, mit Hilfe dessen ein Aufdruck auf der Oberfläche des genannten Objektes nach einem vorgegebenen Motif erreicht werden soll, und
- das mit der genannten Tinte bedruckte Objekt auf eine vorgegebene Temperatur erhitzt wird, um das oder die genannte(n) Metallsalz(e) in ein oder mehrere Metalloxide zu verwandeln, die die gewünschte Farbe aufweisen.
